# EUROPÄISCHE PATENTSCHRIFT

(11) **EP 3 733 512 B1**
(45) Veröffentlichungstag und Bekanntmachung des Hinweises auf die Patenterteilung: **18.10.2023**
(21) Anmeldenummer: 20182196.4
(22) Anmeldetag: 08.06.2018
(51) Int. Cl.: B64C 39/02, G05D 1/10, B66C 13/04, B64D 1/22, B64U 101/60

(54) **VERFAHREN UND VORRICHTUNG ZUM HEBEN EINER LAST**
METHOD AND DEVICE FOR LIFTING A LOAD
PROCÉDÉ ET DISPOSITIF DE LEVAGE D'UNE CHARGE

(30) Priorität: 09.06.2017 DE 102017112765
(43) Veröffentlichungstag der Anmeldung: 04.11.2020
(62) Teilanmeldung aus: 18730740.0
(73) Patentinhaber: Liebherr-Werk Biberach GmbH, 88400 Biberach an der Riss (DE)
(72) Erfinder: SCHÜTZ, Gebhard, 88486 Kirchberg (DE); BRAMBERGER, Robert, 82293 Mittelstetten/Vogach (DE); SCHOLZ, Tobias, 88400 Biberach (DE)
(74) Vertreter: Thoma, Michael

(56) Entgegenhaltungen:
- WO-A1-2016/068767
- DE-U1-202016 002 295
- US-A1- 2009 299 551
- US-B1- 9 079 662
- US-B1- 9 205 922

## Beschreibung

Die vorliegende Erfindung betrifft ein Verfahren und eine Vorrichtung zum Heben einer Last, wobei zumindest eine Flugdrohne zumindest einen Teil der Last trägt.

In jüngerer Zeit wurde angedacht, Lasten mittels Flugdrohnen zu heben und somit Hubaufgaben, die klassischerweise von Kranen ausgeführt wurden, flexibler ausführen zu können, um Beschränkungen und Mühen des Kranbetriebs möglichst zu reduzieren oder gänzlich zu vermeiden.

Die Schriften US 2009/0299551 A1, US 9,079,662 B2 und US 9,205,922 B1 beschreiben es, Lasten mittels mehrerer Flugdrohnen zu heben, um bei schwereren Lasten ausreichend Hubkraft zur Verfügung zu haben, wobei verschiedene Steuerungsmaßnahmen ergriffen werden, um eine Kollision der Flugdrohnen miteinander zu verhindern und die Last entlang einer gewünschten Flugbahn zu dirigieren. Aus der Schrift WO 2016/068767 A1 ist es ferner bekannt, zum Heben schwerer Lasten einen Multicopter zu verwenden, dessen Rotoren von einer Gasturbine her über hydraulische Antriebsstränge anzutreiben, die jeweils einen von der Gasturbine angetriebenen, als Pumpe arbeitenden Hydrostaten und einen mit dem jeweiligen Rotor verbundenen, als Motor arbeitenden Hydrostaten aufweisen. Die Drehzahl der Rotoren wird dabei über Steuerventile gesteuert, über die gegebenenfalls überschüssiges Drucköl abgelassen wird.

Beispielsweise gibt es im Bereich von Baustellen diverse Hubaufgaben, für die eigens ein Kran angeliefert, aufgebaut, wieder abgebaut und wieder abtransportiert werden muss. Beispielsweise können dies Einzelhübe sein, um bestimmte Bauwerksteile oder Bauwerkzeuge an einen bestimmten Bereich eines zu errichtenden oder umzubauenden Bauwerks zu verbringen. Wenn an der Baustelle ansonsten kein Kran benötigt wird, muss der Kran eigens hierfür aufgebaut werden.

Auch wenn an sich ein Kran auf der Baustelle verwendet wird, können solche Sonderhübe anfallen, für die ein weiterer Kran benötigt wird, beispielsweise für das Errichten des stationären, dauerhaften Baukrans.

Bislang wurden Flugdrohnen im Bereich von Baustellen und anderen Kraneinsatzfeldern wie beispielsweise bei Containerkränen oder Hafenkränen vorrangig für akzessorische Hilfsfunktionen eingesetzt, insbesondere um Kameras oder ähnliche bildgebende Überwachungseinrichtungen in Position zu fliegen, um den Kranbetrieb bzw. den Hubvorgang, der vom Kran ausgeführt wird, zu überwachen. Insbesondere kann das von der an der Flugdrohne angebrachten Kamera bereitgestellte Bild auf einem Bildschirm im Kranführerstand angezeigt werden, um dem Kranführer einen anderen Blickwinkel auf den Kranhaken zu geben.

Wenn die Flugdrohne allerdings am Heben der Last beteiligt wird, ist die Steuerung der Flugdrohne anderen Einflüssen ausgesetzt und deutlich schwieriger bzw. komplexer. Insbesondere werden von der Last, mit der die Flugdrohne verbunden ist, beträchtliche Kräfte auf die Flugdrohne ausgeübt, die nicht nur statisch in vertikaler Richtung ziehen, sondern auch horizontale Komponenten aufweisen und beispielsweise durch Windstöße variieren können. Zudem können Pendelbewegungen und damit dynamische Kräfte von der Last her die Flugdrohne rasch in ungewünschte Positionen bringen oder in Bewegungen versetzen.

Hiervon ausgehend liegt der vorliegenden Erfindung die Aufgabe zugrunde, ein verbessertes Verfahren und eine verbesserte Vorrichtung zum Heben von Lasten mittels einer Flugdrohne zu schaffen, die Nachteile des Standes der Technik vermeiden und Letzteren in vorteilhafter Weise weiterbilden. Insbesondere soll eine einfache Steuerung der Flugdrohne auch unter Einfluss der mit der Flugdrohne verbundenen Last erzielt werden.

Erfindungsgemäß wird die genannte Aufgabe durch ein Verfahren gemäß Anspruch 1 sowie eine Vorrichtung gemäß Anspruch 9 gelöst. Bevorzugte Ausgestaltungen der Erfindung sind Gegenstand der abhängigen Ansprüche.

Es wird also vorgeschlagen, zum Heben der Last mehrere Flugdrohnen zusammenzuspannen und eine gemeinsame Steuerung für die mehreren vorzusehen, um nicht mehrere Flugdrohnen mit separaten Steuermitteln sozusagen mehrhändig steuern zu müssen. Die Last wird auf mehrere Flugdrohnen aufgeteilt. Zusätzlich zu der zumindest einen Flugdrohne, die zumindest einen Teil der Last trägt, ist erfindungsgemäß vorgesehen, dass die Last mit einer weiteren Flugdrohne verbunden sowie von der weiteren Flugdrohne teilweise mitgetragen und/oder dirigiert wird, wobei die beiden Flugdrohnen miteinander von einer gemeinsamen Steuereinrichtung zum Steuern von Flugbewegungen aufeinander abgestimmt angesteuert werden. Wird die Steuereinrichtung beispielsweise betätigt, um eine Flugdrohne zu verfliegen, wird automatisch ein darauf abgestimmtes Steuersignal generiert, um die weitere Flugdrohne in entsprechender Weise zu bewegen.

Wird eine Last durch einen Kran, beispielsweise in Form eines Turmdrehkrans, eines Mobil-Teleskopkrans oder eines Hafenkrans, gehoben, können mehrere Flugdrohnen gleichzeitig zum Kranhaken an die zu hebende Last angebunden oder auch direkt mit dem Kranhaken verbunden werden, um in verschiedener Weise beim Heben der Last zu helfen. Beispielsweise kann die zu hebende Last für den Kran erleichtert werden, beispielsweise um eine die Tragfähigkeit bzw. Lastkapazität des Krans an sich übersteigende Last heben zu können, so dass der Baustellenbetreiber umhinkommt, einen für diese Hubaufgabe größeren Kran aufzustellen. Die Flugdrohnen können also eine reine Hebefunktion ausführen und zusammen mit einem Kran eine Last anheben.

Es können mehrere Flugdrohnen mit der Last oder dem Lasthaken verbunden werden, wobei es beispielsweise vorteilhaft sein kann, zumindest ein Paar Flugdrohnen auf gegenüberliegenden Seiten des Lasthakens zu positionieren und mit der Last bzw. dem Lasthaken selbst zu verbinden, um Horizontalkräfte in einander näherungsweise entgegengesetzte Richtungen auf den Lasthaken bzw. die daran angehängte Last ausüben zu können bzw. gegeneinander kompensieren zu können, wenn beispielsweise nur die Hebefähigkeit der Flugdrohnen benötigt wird.

Werden mehrere Flugdrohnen zusammengespannt und ohne Kran zum Heben einer Last eingesetzt, kann die gemeisame Steuerung die beiden Flugdrohnen auf Abstand voneinander halten und gemeinsam entlang einer bestimmten Flugbahn zu einem Bestimmungsziel fliegen. Die Flugdrohnen können dabei beispielsweise über separate Hubseile an der gemeinsamen Last befestigt werden, oder auch an einem gemeinsamen Hubjoch befestigt werden, an dem wiederum die Last befestigt ist.

Um für die im Baustellenbetrieb schweren Lasten durch die Flugdrohnen ausreichende Hubkräfte und Zugkräfte bereitstellen zu können, gleichzeitig aber auch ein ausreichend schnelles Ansprechen der Flugdrohne auf Steuerbefehle und damit eine feinfühlige Steuerung der Hub- und/oder Zugkraft und/oder der Flugbahn der Flugdrohne zu ermöglichen, weisen die Flugdrohnen gemäß der Erfindung jeweils einen hydrostatischen Antriebsstrang zum Antreiben zumindest eines Rotors der Flugdrohne auf, wobei ein solcher hydrostatischer Antriebsstrang einen als Pumpe arbeitenden, mit einem Antriebsmotor verbindbaren Hydrostaten sowie einen oder mehrere Hydrostaten umfassen kann, der bzw. die als Motor arbeiten können und mit jeweils einem Rotor verbindbar sind, um diesen anzutreiben und vom als Pumpe arbeitenden Hydrostaten versorgt werden. Durch einen solchen hydrostatischen Antriebsstrang kann das an einem Rotor bereitgestellte Drehmoment und/oder dessen Drehzahl sehr schnell variiert werden, indem eine oder mehrere hydrostatische Stellgrößen in Form des Schluckvolumens eines oder mehrerer Hydrostaten und/oder des Verstellwinkels eines oder mehrerer verstellbar ausgebildeter Hydrostaten variiert werden. Dabei steht eine solche schnelle Verstellbarkeit des Drehmoments und/oder der Drehzahl auch dann zur Verfügung, wenn auf einem hohen Leistungsniveau mit großen Drehmomenten und/oder hohen Drehzahlen gearbeitet wird, um hohe Traglasten zu heben.

Werden Flugdrohnen mit mehreren Rotoren beispielsweise in Form sogenannter Multikopter verwendet, ermöglicht ein solches hydrostatisches Antriebssystem die genannte feinfühlige, rasche Steuerbarkeit von Drehmoment und/oder Drehzahl für jeden Rotor individuell. Insbesondere können mehrere Hydrostaten vorgesehen sein, die mit jeweils einem der Rotoren verbunden sind, um den jeweiligen Rotor anzutreiben, sodass durch Verstellen des jeweiligen Hydrostaten - was individuell erfolgen kann - die Drehzahl und/oder das Drehmoment des jeweiligen Rotors individuell verstellt werden kann.

Vorteilhafter Weise kann der Antriebsmotor, der einen als Pumpe arbeitenden Hydrostaten antreibt, als Verbrennungsmotor beispielsweise in Form eines Dieselmotors ausgebildet sein. Durch einen solchen Verbrennungsmotor kann eine ausreichend hohe Leistung auch über längere Betriebszeiten bereitgestellt werden, um für das Heben größerer Lasten ausreichende Tragfähigkeiten der Flugdrohne zu realisieren.

Dabei kann es vorteilhaft sein, den genannten Verbrennungsmotor in einem zumindest näherungsweise stationären Betriebszustand zu betreiben, insbesondere im Wesentlichen mit Vollast, zumindest während eine Hubaufgabe erledigt wird. Die Steuerung der Hub- und/oder Zugkraft und/oder der Flugbahn der Flugdrohne kann durch Verstellen einer hydrostatischen Stellgröße des hydrostatischen Getriebes bzw. des hydrostatischen Antriebsstrangs erfolgen, insbesondere auch ausschließlich durch Verstellen einer oder mehrer hydrostatischer Stellgrößen.

In vorteilhafter Weiterbildung der Erfindung kann eine solche Flugdrohne mit einem hydrostatischen Antriebsstrang mit einer Bodenversorgungsstation zusammenarbeiten, die mit der Flugdrohne gekoppelt werden kann. Insbesondere kann eine solche Versorgungsstation am Boden ein Kühl- und/oder Filtrieraggregat umfassen, das mit dem hydrostatischen Versorgungskreis des hydrostatischen Antriebsstrangs gekoppelt werden und die Hydraulikflüssigkeit des hydrostatischen Antriebsstrangs der Flugdrohne kühlen und/oder filtrieren kann.

Alternativ oder zusätzlich kann die genannte Versorgungsstation auch eine Druckquelle umfassen, die mit dem hydrostatischen Antriebsstrang der Flugdrohne koppelbar ist und den hydrostatischen Antriebsstrang vorspannen kann, insbesondere einen dort gewünschten Soll-Betriebsdruck bereitstellen und/oder einstellen kann.

Um die Steuerung der Flugdrohnen an den Kran bzw. an weitere Flugdrohnen in einfacher Weise anzupassen und dem Maschinenführer die Bedienung einfach zu machen, kann die zuvor genannte, gemeinsame Steuereinrichtung eine Hauptsteuereinheit mit Eingabemitteln, von der aus auf Basis der eingegebenen Bewegungswünsche Steuersignale an die zumindest eine Flugdrohne und/oder den Kran generiert und übermittelt werden, sowie eine Zusatzsteuereinheit aufweisen, von der aus Steuerbefehle für zumindest eine weitere Flugdrohne in Abhängigkeit der Flug- oder Kranbewegungen, die von der Hauptsteuereinheit veranlasst wurden, generiert und übermittelt werden. Die genannte Zusatzsteuereinheit kann an die Hauptsteuereinheit angebunden und dazu ausgebildet sein, in Abhängigkeit der von der Hauptsteuereinheit generierten Steuersignale automatisch daran angepasste Steuersignale für die zusätzlich verwendete Flugdrohne zu generieren. Beispielsweise kann die genannte Zusatzsteuereinheit ein Folgesteuermodul umfassen, mittels dessen die zusätzliche Flugdrohne so gesteuert wird, dass sie den Flugbewegungen einer Hauptdrohne automatisch folgt, ohne dass der Maschinenführer hierfür eigens Bewegungswünsche für die zusätzliche Flugdrohne eingeben müsste. Vorteilhafterweise kann die genannte Zusatzsteuereinheit dabei derart ausgebildet sein, dass die zusätzliche Flugdrohne nicht nur eine gewünschte Relativposition relativ zum Kran oder der genannte Hauptdrohne halten kann, sondern dass die genannte Relativposition auch variabel vorgebbar und veränderbar ist, beispielsweise auch dergestalt, dass sich die genannte Relativposition während eines Hebevorgangs kontinuierlich verändert. Beispielsweise kann die Zusatzsteuereinheit für die zusätzliche Flugdrohne einen bestimmten Weg relativ zum Kran vorgeben, den die Flugdrohne während eines Hebevorgangs bzw. in Abhängigkeit der Position des Lasthakens abfliegt. Wird beispielsweise ein länglicher Träger in etwa horizontaler Ausrichtung aus einer zunächst auslegerparallelen Ausgangsstellung angehoben und soll dieser längliche Träger in einer dazu verdrehten, beispielsweise näherungsweise senkrechten Ausrichtung zur vertikalen Ebene durch den Kranausleger am Bestimmungsort abgesetzt werden, kann die Zusatzsteuereinheit für die Flugdrohne einen Flugweg bestimmen, der seinen Ausgangspunkt beispielsweise etwa senkrecht unter dem Kranausleger haben kann und sich dann, um während der Hubbewegung des Lasthakens den länglichen Träger relativ zum Kranausleger zu verdrehen, schraubenförmig um eine Senkrechte durch die Laufkatze des Krans herum erstrecken kann.

Um eine einfache Bedienung der Flugdrohne zu ermöglichen, kann in Weiterbildung der Erfindung die Flugdrohne auch in Abhängigkeit einer Position einer weiteren Drohne angesteuert werden derart, dass die Flugdrohne Bewegungen einer Leitdrohne automatisch folgt und eine gewünschte Position relativ zur Leitdrohne auch bei Leitdrohnenbewegungen zumindest näherungsweise hält bzw. zu halten versucht und nachfährt.

Vorteilhafterweise kann die Flugdrohne jedoch auch autonom ferngesteuert werden derart, dass von der Flugdrohne verschiedene gewünschte Positionen zur Leitdrohne frei angeflogen werden können. Alternativ oder zusätzlich kann jedoch die Flugdrohne auch gänzlich frei gegenüber einer Leitdrohne verflogen werden, beispielsweise mit Hilfe eines Joysticks, um die Flugdrohne so lange zu verfliegen, bis eine gewünschte Relativposition erreicht ist. In einem Automatikmodus kann die gemeinsame Steuervorrichtung die angeflogenen Reltivposition dann automatisch halten oder zu halten versuchen und etwaigen Hubbewegungen der Leitdrohne folgen.

Um die Flugdrohne relativ zur Leitdrohne positionieren und deren Bewegungen automatisch nachfahren zu können, kann die Flugdrohne in einem relativen, oder leitdrohnenfesten Koordinatensystem positionsgesteuert werden. Hierzu kann eine Positionsbestimmungseinrichtung vorgesehen sein, die die Flugposition der Flugdrohne relativ zur Leitdrohne kontinuierlich oder zyklisch bestimmt, wobei eine solche Positionsbestimmungseinrichtung beispielsweise eine Signal-Ortungseinrichtung aufweisen kann, die von der Flugdrohne kommende und/oder an die Flugdrohne gesendete Signale orten und/oder hinsichtlich bestimmter Signaleigenschaften auswerten kann, um hieraus die Relativposition der Flugdrohne zur Leitdrohne zu bestimmen.

Eine solche Signal-Ortungseinrichtung kann beispielsweise dergestalt realisiert sein, dass an der Leitdrohne mehrere Sende-Empfangseinheiten angebracht werden, die mit einer Sende-Empfangseinheit an der Flugdrohne kommunizieren, so dass aus den Signallaufzeiten und/oder Signalstärken und/oder Signalrichtungen im Sinne der Verbindungslinien zwischen den verschiedenen kran- bzw. maschinenseitigen Sende-/Empfangseinheiten zu der Sende-/Empfangseinheit der Flugdrohne deren Position relativ zur Leitdrohne bestimmt werden kann.

Die genannten Sende-/Empfangseinheiten können beispielsweise Transponder oder Nahbereichs-Sende-/Empfangseinheiten sein. Im Falle eines Krans können die genannten Sende-/Empfangseinheiten beispielsweise am Ausleger, an der Laufkatze, am Turm und/oder am Lasthaken selbst angebracht sein. Insbesondere können die Signallaufzeiten von der jeweiligen Sende-/Empfangseinheit am Kran bzw. der Maschine zu den Flugdrohnen und/oder zurück von den Flugdrohnen zu der maschinenseitigen Sende-/Empfangseinheit bestimmt und/oder Signalstärken erfasst und/oder die Richtungen, in denen maximale Signalstärken auftreten, bestimmt werden, um aus den Signallaufzeiten und/oder Signalstärken und/oder Signalrichtungen maximaler Signalstärke die Position der Flugdrohnen relativ zum Kran zu bestimmen.

Alternativ oder zusätzlich zu einer solchen relativen Positionsbestimmung in einem maschinenfesten Koordinatensystem können auch die Positionen der

Flugdrohnen einerseits und des Krans, insbesondere des Lasthakens, bzw. der Leitdrohne andererseits jeweils in einem absoluten Koordinatensystem bestimmt werden, so dass aus den beiden Absolutpositionen wiederum die Relativposition bestimmt werden kann und in der zuvor beschriebenen Weise beispielsweise die Flugdrohnen derart angesteuert werden können, dass die den Flugdrohnen einem Lasthaken bzw. einer Leitdrohne und dessen/deren Bewegungen automatisch folgen bzw. zu folgen versuchen.

Die genannte absolute Positionsbestimmung kann beispielsweise mittels eines Ortungssystems, beispielsweise einem GPS-System erfolgen. Beispielsweise können die Flugdrohnen einerseits und der Lasthaken andererseits jeweils mit einer GPS-Einheit ausgestattet sein, um einerseits die absolute Raumposition des Lasthakens und andererseits die absolute Raumposition der Flugdrohnen zu bestimmen. Die Raumposition des Lasthakens kann näherungsweise aber auch aus den bekannten Bewegungs- und/oder Stellungsdaten der Arbeitsmaschinenkomponenten wie beispielsweise dem Drehwinkel eines Turmdrehkrans, der Laufkatzenstellung und der Lasthaken-Höhe bestimmt werden, aus denen bei bekanntem Aufstellort zumindest näherungsweise, insbesondere unter Vernachlässigung von Pendelbewegungen und/oder Windeinflüssen, die Lasthakenposition bestimmbar sind.

In vorteilhafter Weiterbildung der Erfindung kann die Positionssteuerung der Flugdrohnen auch in Abhängigkeit von Arbeitsbereichsbegrenzungen und/oder Baustellen-Modelldaten und/oder Hinderniserfassungs-Daten, die an den Flugdrohnen selbst gewonnen werden können, gesteuert werden.

Die Erfindung wird nachfolgend anhand eines bevorzugten Ausführungsbeispiels und zugehöriger Zeichnungen näher erläutert. In den Zeichnungen zeigen:
- Fig. 1:: eine schematische Seitenansicht eines Krans in Form eines Turmdrehkrans mit einer am Lasthaken angeschlagenen Last sowie einer zusätzlichen, mit der Last verbundenen Flugdrohne, eines nicht erfindungsgemäßen Beispiels,
- Fig. 2:: eine schematische Darstellung zweier zusammengespannter, mit einer gemeinsamen Last verbundenen Flugdrohnen,
- Fig. 3:: eine Frontalansicht des Krans aus Fig. 1 in einer Blickrichtung parallel zur Auslegerlängsachse, wobei zwei auf gegenüberliegenden Seiten des Lasthakens positionierte Flugdrohnen dargestellt sind, die mit der am Lasthaken angeschlagenen Last verbunden sind,

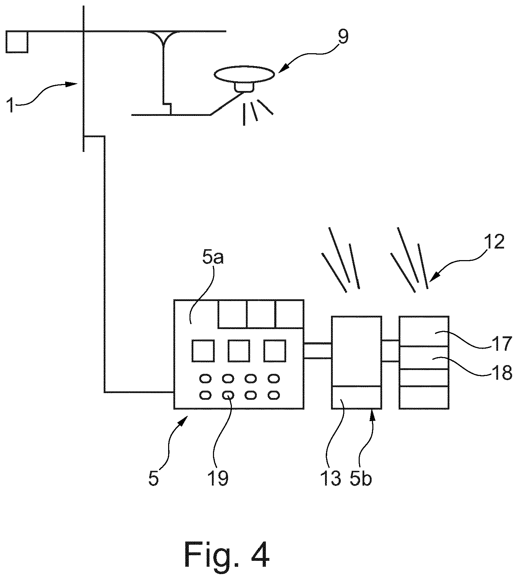

- Fig. 4:: eine schematische Darstellung der gemeinsamen Steuereinrichtung zum Steuern eines Krans und der zusätzlichen Flugdrohnen zum gemeinsamen Heben einer Last, eines nicht erfindungsgemäßen Beispiels,
- Fig. 5:: eine schematische Darstellung des hydraulischen Antriebsstrangs einer Flugdrohne nach der Erfindung, wobei weiterhin eine Versorgungsstation, an die die Flugdrohne mit dem hydrostatischen Antriebsstrang ankoppelbar ist, dargestellt ist, mittels derer der hydrostatische Antriebsstrang vorgespannt, gekühlt und filtriert werden kann,
- Fig. 6:: eine schematische Darstellung der auf zwei Ebenen verteilten, insgesamt acht Rotoren einer Flugdrohne, die ebenenweise und in einer Ebene seitenweise unterschiedliche Drehrichtungen realisieren, und
- Fig. 7:: eine schematische Darstellung der Steuerungshierarchie zum Steuern einer Flugdrohne.

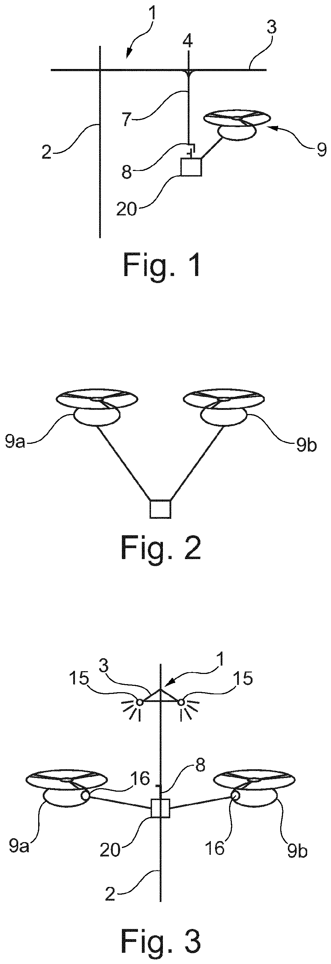

Wie Fig. 1 zeigt, kann der Kran 1 als Turmdrehkran ausgebildet sein, dessen Turm 2 einen Ausleger 3 trägt, an dem eine Laufkatze 4 verfahrbar gelagert ist. Der Ausleger 3 kann zusammen mit dem Turm 2 oder auch ohne den Turm 2 - je nach Ausbildung des Krans als Oben- oder Unterdreher - um eine aufrechte Achse verdreht werden, wozu ein Drehwerksantrieb vorgesehen ist. Der Ausleger 3 könnte ggf. auch auf- und niederwippbar um eine liegende Querachse ausgebildet sein, wobei ein geeigneter Wippantrieb beispielsweise im Zusammenspiel mit der Auslegerabspannung vorgesehen sein könnte. Die genannte Laufkatze 4 kann mittels einer Katzfahrwinde oder eines anderen Katzfahrantriebs verfahren werden. Die genannten Antriebsvorrichtungen können von einer Steuervorrichtung 5 angesteuert werden, die eine stationäre Bedieneinheit mit geeigneten Eingabemitteln 19 beispielsweise in Form von Joysticks in der Kranführerkabine 6 bzw. am Steuerstand des Krans oder einem Fernsteuerstand umfassen kann und/oder auch eine mobile Bedieneinheit mit entsprechenden Eingabemitteln aufweisen kann. Eine solche mobile Bedieneinheit kann beispielsweise in Form einer Funkfernsteuerung ausgebildet sein, die der Kranführer bei sich tragen kann, wenn er im Kranarbeitsbereich über die Baustelle läuft, um den Kran auch außerhalb der Kranführerkabine 6 steuern zu können.

Um den Lasthaken 8, der mit einem von der Laufkatze 4 ablaufenden Hubseil 7 verbunden sein kann, oder eine daran aufgenommene Last 20 im Zusammenspiel mit dem Lasthaken 8 manipulieren zu können, ist zumindest eine Flugdrohne 9 vorgesehen, die mit der Last 20 und/oder mit dem Lasthaken 8 durch ein Zug- und/oder Schubmittel, insbesondere ein Hubseil oder eine Schubstange, verbunden wird.

Um zusätzlich zum Manipulieren der Last einen besseren Überblick über die Manipulationsaufgabe zu geben, kann an der Flugdrohne zumindest eine Kamera montiert ist, mittels derer ein Kamerabild vom Lasthaken 8 und/oder der Lasthakenumgebung bereitgestellt werden kann. Das genannte Kamerabild ist vorteilhafterweise ein Live- oder Echtzeitbild im Sinne eines Fernseh- oder Videobilds und wird von der Kamera 10 der Flugdrohne 9 drahtlos zu einer Anzeigeeinheit und/oder der Steuervorrichtung 5 des Krans 1 übertragen, wobei die genannte Anzeigeeinheit beispielsweise ein Maschinenführerdisplay nach Art eines Tablets oder eines Bildschirms oder eines Monitors sein kann, der in der Kranführerkabine 6 montiert sein kann. Wird in der zuvor genannten Weise ein Fernsteuerstand oder eine mobile Bedieneinheit zum Steuern des Krans 1 verwendet, kann die genannte Anzeigeeinheit 11 in dem Fernsteuerstand oder an der mobilen Bedieneinheit vorgesehen sein.

Die Flugdrohne 9 ist mit einer Fernsteuereinrichtung 12 versehen, die es erlaubt, die Flugdrohne 9 fernzusteuern, insbesondere die Flugsteueraggregate wie beispielsweise Rotorblätter anzusteuern, um die Flugposition der Flugdrohne 9 fernzusteuern.

Ein entsprechendes Fernsteuermodul ist vorteilhafterweise in die Steuereinrichtung 5 integriert und/oder kann in der Kranführerkabine 6 und/oder dem Fernsteuerstand oder der mobilen Bedieneinheit vorgesehen sein, beispielsweise mit entsprechenden Joysticks ausgestattet sein.

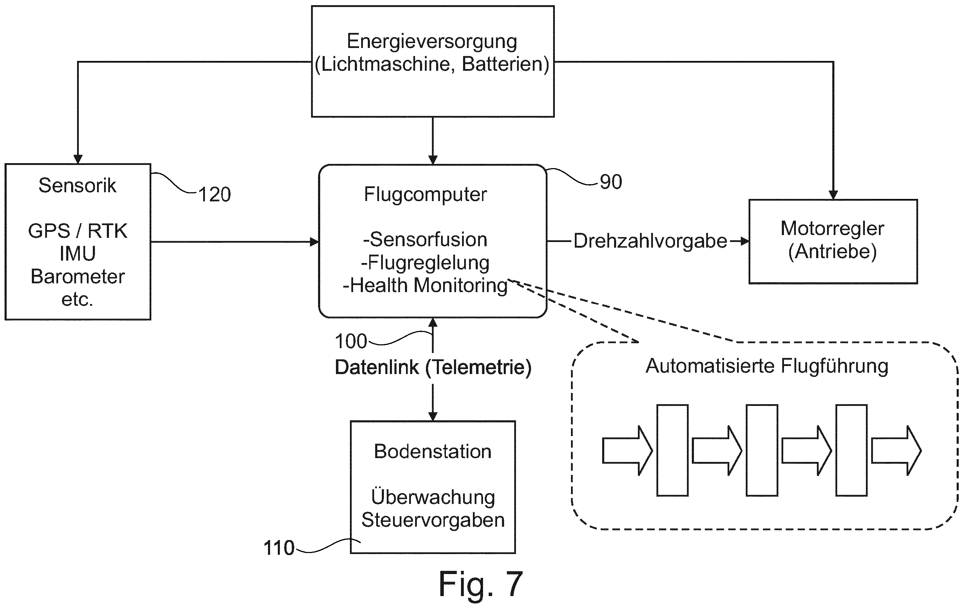

Wie Fig. 7 zeigt, kann die Steuerung der Flugdrohne 9a; 9b einen Flugcomputer 90 umfassen, der an der Flugdrohne vorgesehen sein kann und beispielsweise einen oder mehrere Mikroprozessoren, einen oder mehrere Programmspeicher und weitere Hardware- und/oder Softwarekomponenten umfassen kann, um ein Flugsteuerungsprogramm abzuarbeiten. Wie Fig. 7 weiterhin zeigt, kann der genannte Flugcomputer 90 über eine Kommunikationsverbindung 100, beispielsweise eine Funkverbindung, mit einer Bodenstation 110 kommunizieren, um Daten vom Flugcomputer 90 and die Bodenstation 110 oder umgekehrt von der Bodenstation 110 an den Flugcomputer 90 zu übermitteln. Beispielsweise können Telemetriedaten wie GPS-Position, Rotordrehzahl, Hubkraft und andere Drohnenparameter vom Flugcomputer 90 and die Bodenstation 110 übermittelt werden, um dort überwacht und/oder ausgewertet zu werden. Alternativ oder zusätzlich können von der Bodenstation 110 Daten wie beispielsweise Steuersignale an den Flugcomputer 90 übermittelt werden, um dort die Steuerung der Flugdrohne zu beeinflussen.

Der besagte Flugcomputer 90 kann hierbei von einer an der Flugdrohne 9a; 9b vorgesehenen Sensorik 120 mit Sensorsignalen versorgt werden, die einen aktuellen Betriebszustand der Flugdrohne und/oder Bewegungsparameter angeben, beispielsweise ein Positionssignal wie beispielsweise eine GPS-Position, Luftdruck, Windgeschwindigkeit, Kompassdaten oder Ähnliches.

Anhand der Sensordaten der Sensorik 120 und/oder anhand der von der Bodenstation 110 erhaltenen Daten kann der Flugcomputer 90 eine Flugregelung und/oder -steuerung ausführen bzw. abarbeiten und Antriebe der Flugdrohne ansteuern, insbesondere um eine Drehzahl und/oder ein Drehmoment eines jeweiligen Rotors zu variieren.

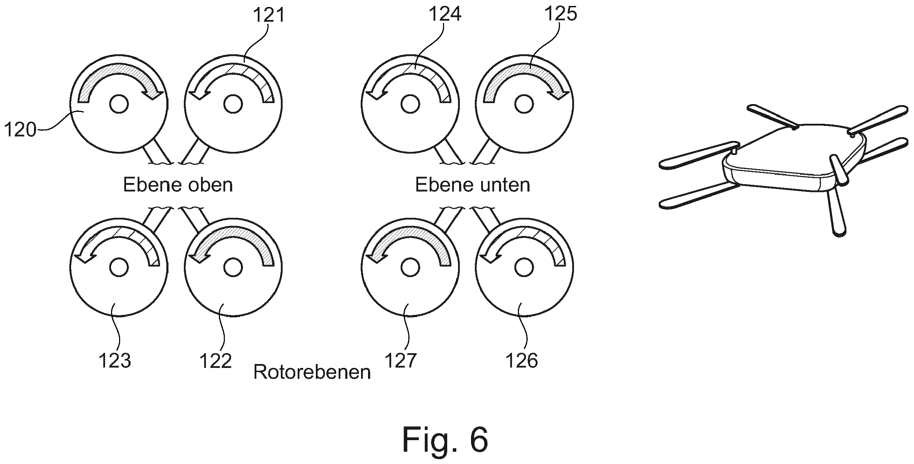

Wie Fig. 6 zeigt, kann die Flugdrohne 9a; 9b mehrere Rotoren 120 bis 127 aufweisen, die beispielsweise in zwei Ebenen übereinander liegend angeordnet und in jeder Ebene kreuzweise angeordnet sein können. Vorteilhafter Weise sind dabei die Antriebe der Rotoren 120 bis 126 und/oder deren Antriebsgetriebe derart konfiguriert, dass in einer Ebene gegenüberliegende Rotoren - also beispielsweise 120 und 122 sowie 121 und 123 jeweils richtungsgleich drehen, nebeneinanderliegende Rotoren allerdings entgegengesetzt drehen. Dabei können die Drehrichtungen in den beiden Rotorebenen umgedreht sein, sodass ein übereinander/untereinander liegendes Paar von Rotoren den beiden Rotorebenen gegenläufig drehen, vgl. Fig. 6.

Bei einem solchen Multikopter kann die Flugbewegung und/oder die bereitgestellte Traglast bzw. Hub- und/oder Zuglast gezielt durch die Schubverteilung an den Rotoren gesteuert werden, insbesondere indem die Drehzahlen an den einzelnen Rotoren 120 bis 126 und/oder deren Drehmoment individuell, paarweise oder gruppenweise variiert wird, um ein Steigen und/oder Sinken der Flugdrohne 9a, 9b und/oder ein Nicken und/oder Rollen und/oder Gieren herbeizuführen.

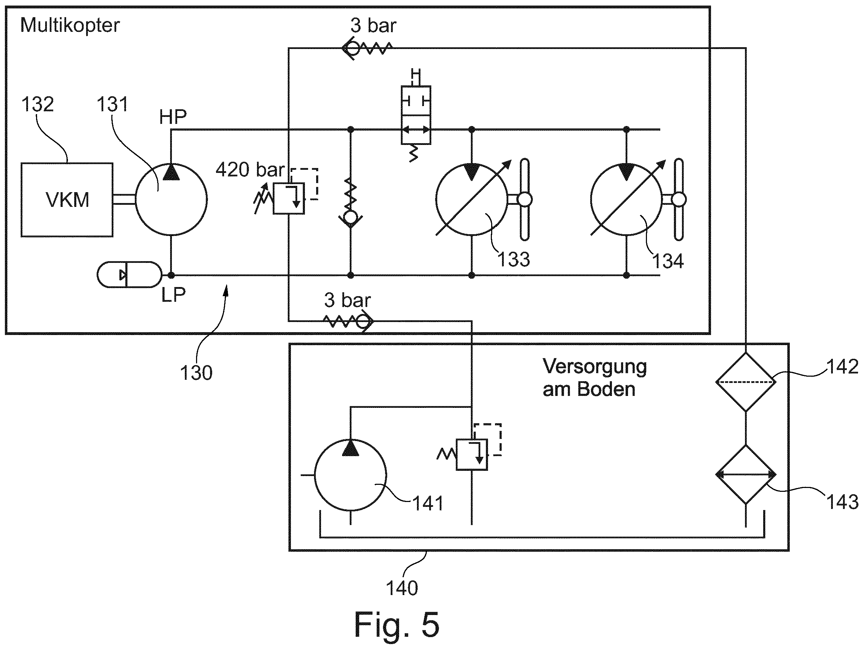

Wie Fig. 5 zeigt, weist die Flugdrohne 9a; 9b hierbei erfindungsgemäß einen hydraulischen Antriebsstrang 130 zum Antreiben der Rotoren 120 bis 127 aufweisen, wobei der hydraulische Antriebsstrang 130 bzw. das hydrostatische Getriebe einen als Pumpe arbeitenden Hydrostaten 131 umfassen kann, der von einem Antriebsmotor 132 angetrieben werden kann. Der genannte Antriebsmotor 131 kann vorteilhafter Weise als Verbrennungskraftmaschine VKM ausgebildet sein, beispielsweise in Form eines Dieselmotors oder eines Benzinmotors oder eines Gasverbrennungsmotors.

Der hydrostatische Antriebsstrang 130 umfasst weiterhin mehrere weitere Hydrostaten 133 und 134, die jeweils mit einem der Rotoren 120 bis 127 antriebsverbunden sind und von dem als Pumpe arbeitenden Hydrostaten 131 her versorgt werden können. In der Fig. 5 sind dabei nur zwei als Motor arbeitende Hydrostaten 133 und 134 gezeigt. Es versteht sich jedoch, dass weitere solche als Motor arbeitende Hydrostaten vorgesehen werden können, um die einzelnen Rotoren jeweils antreiben zu können, die die Flugdrohne 9a; 9b besitzt. Solche weiteren Hydrostaten können insbesondere in Parallelschaltung zu den gezeigten Hydrostaten 133 und 134 mit den Versorgungs- und Rückleitungen verbunden sein, die an den als Pumpe arbeitenden Hydrostaten 131 angeschlossen sind.

Erfindungsgemäß sind die genannten Hydrostaten 131, 133 und 134 jeweils als verstellbare Hydrostaten ausgebildet, deren Schluckvolumen bzw. Pumpleistung variiert werden können. Beispielsweise können Schrägscheibenaggregate Verwendung finden, die im Verstellwinkel einstellbar ausgebildet sind.

Um das Drehmoment und/oder die Drehzahl des jeweiligen Rotors 120 bis 127 zu steuern und/oder zu regeln, kann insbesondere folgendermaßen vorgegangen werden: Vorteilhafter Weise kann der Antriebsmotor 132 zumindest näherungsweise konstant betrieben werden, beispielsweise unter Volllast oder zumindest näherungsweise unter Volllast oder in einem hinsichtlich des Wirkungsgrades günstigen Betriebsbereich. Der von dem Verbrennungsmotor 132 angetriebene Hydrostat 131 setzt die rotatorische Antriebsbewegung des Antriebsmotors 132 in Hydraulikdruck um, der die weiteren Hydrostaten 133, 134 versorgt. Durch Verstellen der genannten Hydrostaten 133 und 134 kann das Drehmoment und/oder die Drehzahl der damit antriebsverbundenen Rotoren variiert werden. Zusätzlich können weitere hydraulische

Stellglieder im hydrostatischen Antriebsstrang Verwendung finden, um die Rotoren zu steuern, beispielsweise über Drucksteuerventile, Massenstromdrosseln etcetera.

Wie Fig. 5 weiterhin zeigt, kann vorteilhafter Weise die Flugdrohne 9a, 9b mit einer Versorgungsstation 140, die am Boden oder auch an anderer Stelle, beispielsweise am Kran installiert sein kann, gekoppelt werden, um den hydrostatischen Antriebsstrang der Flugdrohne zu kühlen und/oder zu filtrieren und/oder im Druck vorzuspannen. Wie Fig. 5 zeigt, kann die Versorgungsstation 140 eine Druckquelle 141 aufweisen, die mit dem hydrostatischen Antriebsstrang beispielsweise über ein Rückschlagventil und/oder ein Sperrventil koppelbar ist, um den hydrostatischen Druckkreis auf einen gewünschten Sollbetriebsdruck vorzuspannen.

Alternativ oder zusätzlich kann die Versorgungsstation eine Filtriereinrichtung 142 und/oder eine Kühlvorrichtung 143 umfassen, die ebenfalls mit dem hydrostatischen Antriebsstrang verbindbar ist/sind, um das Hydrauliköl zu filtrieren und/oder zu kühlen, wenn die Flugdrohne an die Versorgungsstation 140 angekoppelt ist.

Um eine einfache Bedienung zu ermöglichen, kann die gemeinsame Steuereinrichtung 5 eine Hauptsteuereinrichtung 5a mit Eingabemitteln 19 zum Eingeben von Flug- und/oder Kranbewegungswünschen, von der aus auf Basis der eingegebenen Bewegungswünsche Steuersignale an die zumindest eine Flugdrohne 9a und/oder den Kran 1 generiert und übermittelt werden, und eine Zusatzsteuereinrichtung 5b aufweisen, von der aus Steuerbefehle für die zumindest eine und/oder die weitere Flugdrohne 9a; 9b in Abhängigkeit der Flug- oder Kranbewegungen, die von der Hauptsteuereinrichtung 5a veranlasst wurden, generiert und übermittelt werden.

Vorteilhafterweise kann die Position der Flugdrohne 9 relativ zum Kran 1 und/oder dessen Lasthaken zumindest in einem autonomen Steuerungsmodus weitgehend autonom und unabhängig vom Kran gesteuert werden, beispielsweise in an sich bekannter Weise über die genannten Joysticks der Fernsteuereinrichtung 12. Über das autonome Steuerungsmodul der Positionssteuervorrichtung 13 kann eine Wunschposition der Flugdrohne 9 relativ zum Lasthaken 8 angeflogen werden.

Zusätzlich zu einem solchen autonomen Positionssteuermodul kann die gemeinsame Steervorrichtung 5 bzw. deren Zusatzsteuereinrichtung 5b, insbesondere deren Positionssteuervorrichtung 13 ein automatisches Folgesteuerungsmodul aufweisen, um eine vorbestimmte Position der Flugdrohne 9 - beispielsweise die durch das autonome Positionssteuermodul willkürlich angeflogene Wunschposition und/oder eine vorbestimmte, vorprogrammierte Position - zu halten, auch wenn der Kran 1 Kranbewegungen ausführt und/oder der Lasthaken 8 bewegt wird, so dass die Flugdrohne 9 dem Lasthaken 8 weitgehend automatisch folgt und die vorbestimmte Relativposition hierzu hält.

Vorteilhafterweise ist eine Positionsbestimmungseinrichtung 18 vorgesehen, die automatisch kontinuierlich oder zyklisch die Position der Flugdrohne 9 relativ zu dem Kran 1 und/oder dessen Lasthaken 8 bestimmt, so dass die Positionssteuervorrichtung 13 in Abhängigkeit der bestimmten Relativposition die Flugdrohne 9 ansteuern kann.

Die Flugdrohne 9 kann hierzu beispielsweise eine GPS-Einheit 14 umfassen, mittels derer die absolute Raumposition der Flugdrohne 9 bestimmt und der Positionssteuervorrichtung 13 übermittelt wird. Andererseits kann die Position des Lasthakens 8 bestimmt werden, so dass die Positionssteuervorrichtung 13 die Flugdrohne 9 fernsteuern kann, um die Relativposition zu halten.

Die Lasthakenposition kann hierbei grundsätzlich ebenfalls per GPS bestimmt werden, beispielsweise indem in den Lasthaken eine GPS-Einheit integriert wird. Alternativ oder zusätzlich kann jedoch die Lasthakenposition auch aus der Stellung der Krankomponenten bestimmt, insbesondere von der Steuervorrichtung 5 des Krans berechnet werden, beispielsweise indem der Drehwinkel des Auslegers, die Position der Laufkatze 4 am Ausleger 3 und die Abspullänge des Hubseils 7 erfasst werden, woraus sich bei bekanntem Aufstellort des Krans 1 die Lasthakenposition zumindest näherungsweise bestimmen lässt, wenn man dynamische Pendelbewegungen oder Windeinflüsse vernachlässigt.

Alternativ oder zusätzlich zu einer solchen absoluten Positionsbestimmung kann die Position der Flugdrohne 9 auch relativ in einem kranfesten, d.h. sich mit dem Kran mitdrehenden Koordinatensystem bestimmt werden. Hierzu können an dem Kran 1, beispielsweise an dessen Ausleger 3 und dessen Turm 2, ggf. auch an dessen Laufkatze 4 und/oder dessen Lasthaken 8 Sende-/Empfangseinheiten beispielsweise in Form von Transpondereinheiten 15 vorgesehen sein, die vorteilhafterweise an mehreren, voneinander beabstandeten Stellen am Kran 1 angebracht sind. Die genannten Sende-/Empfangseinheiten 15 können mit einer entsprechenden Sende-/Empfangseinheit 16 an der Flugdrohne 9 kommunizieren. Beispielsweise kann dann von einer Ortungseinrichtung 17, die in die Steuervorrichtung 5 des Krans 1 integriert sein kann, aus den Signallaufzeiten eines Signals zwischen der Sende-/Empfangseinheit 16 an der Flugdrohne 9 und den jeweiligen Sende-/Empfangseinheiten 15 am Kran 1 die Abstände der Flugdrohne 9 von den jeweiligen Sende-/Empfangseinheiten 15 am Kran 1 und hieraus die Position der Flugdrohne 9 relativ zum Kran 1 bestimmt werden.

Zusätzlich zu der genannten Positionssteuerung kann die gemeinsame Steuereinrichtung 5 auch ein Hub- und/oder Zugkraft-Steuermodul umfassen, mittels dessen bestimmte Betriebparameter der Flugdrohne 9a bzw. 9b wie bspw. Rotordrehzal und/oder -anstellwinkel so gesteuert werden, dass das Lastaufnahmemittel an der Flugdrohne, bspw. ein Hubseil, das die Drohne mit der Last 20 oder dem Lasthaken 8 verbindet, mit einer gewünschten Kraft beaufschlagt wird, insbesondere mit einem bestimmten Kraftbetrag und/oder einer bestimmten Kraftrichtung beaufschlagt wird.

Beispielsweise kann die Zugspannung und/oder die Neigung ϕ des genannten Hubseils, das die Drohne 9 mit der Last 20 verbindet, gegenüber der Horizontalen mittels einer geeigneten Sensorik überwacht und in Abhängigkeit hiervon die Flugdrohne angesteuert werden, um die Last 20 mittels der Drohne 9 in eine bestimmte Richtung mit einer bestimmten Stärke bzw. Kraft zu ziehen.

Wie Fig. 3 zeigt, können auch mehrere Flugdrohnen 9a und 9b mit der Last 20 oder dem Lasthaken 8 verbunden werden, wobei es beispielsweise vorteilhaft sein kann, zumindest ein Paar Flugdrohnen 9a, b auf gegenüberliegenden Seiten des Lasthakens 8 zu positionieren und mit der Last 20 bzw. dem Lasthaken 8 selbst zu verbinden, um Horizontalkräfte F_{H} in einander näherungsweise entgegengesetzte Richtungen auf den Lasthaken 8 bzw. die daran angehängte Last 20 ausüben zu können bzw. gegeneinander kompensieren zu können, wenn beispielsweise nur die Hebefähigkeit der Flugdrohnen 9a, b benötigt wird.

Neben der genannten Anbindung zumindest einer Flugdrohne 9 an einen Kran 1 kann es für bestimmte Hubaufgaben auch vorteilhaft sein, erfindungsgemäß nur mehrere Flugdrohnen 9a und 9b zusammenzuspannen und die entsprechende Last mit mehreren Flugdrohnen, jedoch ohne den Kran bzw. dessen Lasthaken zu heben, wie dies bspw. Fig. 2 zeigt. Hierdurch kann beispielsweise die Reichweite für eine Hubaufgabe, die bei dem Kran 1 durch dessen Ausladung begrenzt ist, vergrößert werden. Das Heben einer Last 20 nur per Flugdrohnen kann auch beim Aufbau des Krans 1 hilfreich sein, um beispielsweise bestimmte Kranbauteile bei der Kranmontage zu heben.

Werden mehrere Flugdrohnen 9a, b zusammengespannt und ohne Kran zum Heben einer Last 20 eingesetzt, kann die gemeisame Steuereinrichtung 5 die beiden Flugdrohnen 9a und 9b auf Abstand voneinander halten und gemeinsam entlang einer bestimmten Flugbahn zu einem Bestimmungsziel fliegen. Die Flugdrohnen 9 a, b können dabei beispielsweise über separate Hubseile an der gemeinsamen Last befestigt werden, oder auch an einem gemeinsamen Hubjoch befestigt werden, an dem wiederum die Last 20 befestigt ist.

## Patentansprüche

1. Verfahren zum Heben einer Last (20), bei dem zumindest eine Flugdrohne (9) zumindest einen Teil der Last (20) trägt und die Last (20) mit einer weiteren Flugdrohne (9b) verbunden sowie von der weiteren Flugdrohne (9b) teilweise getragen und/oder dirigiert wird, wobei die beiden Flugdrohnen (9a, b) miteinander von einer gemeinsamen Steuereinrichtung (5) zum Steuern von Flugbewegungen aufeinander abgestimmt angesteuert werden, **dadurch gekennzeichnet, dass** eine Hub- und/oder Zugkraft und/oder eine Flugbahn der Flugdrohnen (9a; 9b) durch Variation einer Rotordrehzahl und/oder eines Rotordrehmoments gesteuert wird, wobei die Flugdrohnen (9a; 9b) jeweils einen hydrostatischen Antriebsstrang (130) zum Antreiben zumindest eines Rotors (120-127) umfassend zumindest einen als Pumpe arbeitenden Hydrostaten (131), der von einem Antriebsmotor (132) antreibbar ist, und zumindest einen weiteren, als Motor arbeitenden Hydrostaten (133, 134), der mit dem Rotor verbindbar ist, aufweisen und die genannte Rotordrehzahl und/oder das Rotordrehmoment durch Verstellen eines Hydrostaten-Schluckvolumens und/oder eines Hydrostaten-Schwenkwinkels und/oder einer Hydrostaten-Pumpleistung gesteuert wird.

2. Verfahren nach dem vorhergehenden Anspruch, wobei die Last (20) zusätzlich mit einem Lasthaken (8) eines Krans verbunden sowie von dem Kran (1) teilweise getragen und dirigiert wird, wobei die Flugdrohnen zusammen mit dem Kran (1) von einer gemeinsamen Steuereinrichtung (5) aufeinander abgestimmt angesteuert werden.

3. Verfahren nach einem der vorhergehenden Ansprüche, wobei die gemeinsame Steuereinrichtung (5) eine Hauptsteuereinrichtung (5a) mit Eingabemitteln (19) zum Eingeben von Flug- und/oder Kranbewegungswünschen, von der aus auf Basis der eingegebenen Bewegungswünsche Steuersignale an die zumindest eine Flugdrohne (9a) und/oder den Kran (1) generiert und übermittelt werden, und eine Zusatzsteuereinrichtung (5b) aufweist, von der aus Steuerbefehle für die zumindest eine und/oder die weitere Flugdrohne (9a; 9b) in Abhängigkeit der Flug- oder Kranbewegungen, die von der Hauptsteuereinrichtung (5a) veranlasst wurden, generiert und übermittelt werden.

4. Verfahren nach einem der vorhergehenden Ansprüche, wobei der Antriebsmotor (132) als Verbrennungsmotor ausgebildet ist und in einem zumindest näherungsweise konstanten Betriebszustand, insbesondere zumindest näherungsweise im Volllastbereich, gefahren wird, wobei Drehzahländerungen und/oder Drehmomentänderungen am Rotor durch Verstellen des zumindest einen Hydrostaten (133, 134; 131) variabel gesteuert wird.

5. Verfahren nach einem der vorhergehenden Ansprüche, wobei die Flugdrohnen (9a; 9b) derart gesteuert werden, dass eine Kraft (F) mit einer Horizontalkomponente (F_{H}) auf die Last (20) ausgeübt wird, wobei die Flugdrohnen (9) derart gesteuert werden, dass die Horizontalkomponente (F_{H}) einer Pendelbewegung der Last (20) und/oder einer Windkraft entgegenwirkt.

6. Verfahren nach einem der vorhergehenden Ansprüche, wobei die Flugdrohnen (9) derart gesteuert werden, dass die Last (20) beim Heben um eine aufrechte Achse verdreht wird, wobei zumindest eine Flugdrohne (9) beim Heben der Last (20) entlang eines zumindest näherungsweise schraubenförmigen Wegs um eine aufrechte Achse durch die Last (20) geflogen wird.

7. Verfahren nach einem der vorhergehenden Ansprüche, wobei die Flugdrohnen (9) in einem autonomen Steuermodus autonom ferngesteuert werden derart, dass von einer Flugdrohne (9) verschiedene, jeweils vorgebbare Positionen relativ zu einer Leitdrohne (9a) angeflogen werden.

8. Verfahren nach einem der vorhergehenden Ansprüche, wobei bestimmte Betriebparameter jeder Flugdrohne (9), insbesondere Rotordrehzal und/oder -anstellwinkel, von der Steuereinrichtung (5) so gesteuert werden, dass ein Lastaufnahmemittel an jeder Flugdrohne (9), das die Flugdrohne (9) mit der Last (20) verbindet, mit einem bestimmten Kraftbetrag und einer bestimmten Kraftrichtung beaufschlagt wird, wobei die Kraftrichtungen der verschiedenen Flugdrohnen in verschiedene Richtungen weisen.

9. Vorrichtung zum Heben einer Last (20), bei der zumindest eine Flugdrohne (9) mit der Last (20) durch ein Lastaufnahmemittel zum Tragen zumindest eines Teils der Last (20) verbunden ist und die Last (20) mit einer weiteren Flugdrohne (9b) verbunden ist, wobei eine gemeinsamen Steuereinrichtung (5) zum aufeinander abgestimmten Ansteuern der beiden Flugdrohnen (9a, b) vorgesehen ist, **dadurch gekennzeichnet, dass** eine Hub- und/oder Zugkraft und/oder eine Flugbahn der Flugdrohnen (9a; 9b) durch Variation einer Rotordrehzahl und/oder eines Rotordrehmoments steuerbar sind, wobei die Flugdrohnen (9a; 9b) jeweils einen hydrostatischen Antriebsstrang (130) zum Antreiben zumindest eines Rotors (120-127) umfassend zumindest einen als Pumpe arbeitenden Hydrostaten (131), der von einem Antriebsmotor (132) antreibbar ist, und zumindest einen weiteren, als Motor arbeitenden Hydrostaten (133, 134), der mit dem Rotor verbindbar ist, aufweisen und die genannte Rotordrehzahl und/oder das Rotordrehmoment durch Verstellen eines Hydrostaten-Schluckvolumens und/oder eines Hydrostaten-Schwenkwinkels und/oder einer Hydrostaten-Pumpleistung steuerbar sind.

10. Vorrichtung nach dem vorhergehenden Anspruch, wobei die Last (20) zusätzlich mit einem Lasthaken (8) eines Krans (1) verbunden ist und die gemeinsame Steuereinrichtung (5) zum aufeinander abgestimmten Ansteuern der beiden Flugdrohnen zusammen mit dem Kran (1) ausgebildet ist.

11. Vorrichtung nach einem der beiden vorhergehenden Ansprüche, wobei die gemeinsame Steuereinrichtung (5) eine Hauptsteuereinrichtung (5a) mit Eingabemitteln (19) zum Eingeben von Flug- und/oder Kranbewegungswünschen, von der aus auf Basis der eingegebenen Bewegungswünsche Steuersignale an die zumindest eine Flugdrohne (9a) und/oder den Kran (1) generiert und übermittelt werden, und eine Zusatzsteuereinrichtung (5b), die dazu konfiguriert ist, Steuerbefehle für die zumindest eine und/oder die weitere Flugdrohne (9a; 9b) in Abhängigkeit der Flug- oder Kranbewegungen, die von der Hauptsteuereinrichtung (5a) veranlasst wurden, zu generieren, aufweist.

12. Vorrichtung nach einem der vorhergehenden Ansprüche 9 bis 11, wobei die Steuereinrichtung (5) eine Positionssteuervorrichtung (13) aufweist, die ein automatisches Folgesteuermodul zum Ansteuern der Flugdrohne (9) in Abhängigkeit einer Leitdrohnenposition derart, dass die Flugdrohne (9) Leitdrohnenbewegungen automatisch folgt und eine gewünschte Position relativ zur Leitdrohne auch bei Leitdrohnenbewegungen bewegungen hält, besitzt, wobei die Steuereinrichtung (5) dazu konfiguriert ist, die Flugdrohnen (9) so anzusteuern, dass eine der Flugdrohnen (9) beim Heben der Last (20) entlang einer Schraubenbahn um eine aufrechte, durch die Last (20) gehende Achse, fliegt.

13. Vorrichtung nach Anspruch 10 oder einen der darauf rückbezogenen Ansprüche 11 und 12, wobei eine/die Positionssteuervorrichtung (13) ein autonomes Steuermodul zum autonomen Fernsteuern der Flugdrohne (9) derart, dass von der Flugdrohne (9) verschiedene gewünschte Positionen relativ zum Kran und/oder dessen Lasthaken angeflogen wird, aufweist.

14. Vorrichtung nach Anspruch 10 oder einen der darauf rückbezogenen Ansprüche 11-13, wobei eine Positionsbestimmungseinrichtung (18) zum Bestimmen der Position der Flugdrohne (9) relativ zu einer Leitdrohne vorgesehen ist, wobei eine/die Positionssteuervorrichtung (13) dazu ausgebildet ist, die Flugdrohne (9) in Abhängigkeit der automatisch bestimmten Relativposition zu steuern, wobei die Flugdrohne (9) eine GPS-Einheit zur absoluten Positionsbestimmung der Flugdrohne (9) aufweist, wobei die Positionssteuervorrichtung (13) zum Steuern der Position der Flugdrohne (9) relativ zum Kran dazu ausgebildet ist, die Flugdrohne (9) in Abhängigkeit der absoluten Positionsdaten der Flugdrohne (9) und absoluter Positionsdaten des Krans zu steuern, wobei die Positionsbestimmungseinrichtung (18) eine Signal-Ortungsvorrichtung zum Orten eines von der Flugdrohne (9) abgegebenen Signals aufweist, wobei die genannte Signal-Ortungsvorrichtung an dem Kran angebrachte, voneinander beabstandete Sende-/Empfangseinheiten (15) zum Kommunizieren mit einer Sende-/Empfangseinheit (16) an der Flugdrohne (9) sowie eine Auswerteeinrichtung zum Auswerten der übertragenen Signale zwischen den kranseitigen Sende-/Empfangseinheiten (15) und der drohnenseitigen Sende-/Empfangseinheit (16) hinsichtlich vorbestimmter Signaleigenschaften, insbesondere hinsichtlich Signallaufzeit und/oder Signalstärke, und Bestimmen der Position der Flugdrohne (9) relativ zum Kran (1) aus den Signaleigenschaften aufweist.

15. Vorrichtung nach einem der vorhergehenden Ansprüche 9 bis 14, wobei als Antriebsmotor (132) ein Verbrennungsmotor (VKM) vorgesehen ist, wobei die Flugdrohne (9) als Multikopter ausgebildet ist und mehrere Rotoren aufweist, wobei der hydrostatische Antriebsstrang (130) mehrere als Motor arbeitende Hydrostaten (133, 134) umfasst, die jeweils mit einem Rotor antriebsverbunden sind und individuell verstellbar ausgebildet sind, um die mit den jeweiligen Hydrostaten verbundenen Rotoren individuell Drehzahl zu steuern.

## Claims

1. Method for lifting a load (20), in which at least one aerial drone (9) carries at least a portion of the load (20) and the load (20) is connected to a further aerial drone (9b) and is partially carried and/or directed by the further aerial drone (9b), wherein the two aerial drones (9a, b) are controlled in coordination with each other by a common controller (5) for controlling flight movements, **characterised in that** a lifting and/or tensile force and/or a flight trajectory of the aerial drones (9a; 9b) is controlled by varying a rotor speed and/or a rotor torque, wherein the aerial drones (9a; 9b) each have a hydrostatic drive train (130) for driving at least one rotor (120-127) comprising at least one hydrostatic device (131) that operates as a pump and can be driven by a drive motor (132), and each have at least one further hydrostatic device (133, 134) that operates as a motor and can be connected to the rotor, and said rotor speed and/or rotor torque is controlled by adjusting a hydrostatic displacement volume and/or a hydrostatic swivel angle and/or a hydrostatic pumping capacity.

2. Method according to the preceding claim, wherein the load (20) is additionally connected to a load hook (8) of a crane and is partially carried and directed by the crane (1), wherein the aerial drones together with the crane (1) are controlled in a coordinated manner by a common controller (5).

3. Method according to any one of the preceding claims, wherein the common controller (5) has a main controller (5a) having input means (19) for inputting desired flight and/or crane movements, from which control signals are generated and transmitted to the at least one aerial drone (9a) and/or the crane (1) on the basis of the input desired movements, and has an additional controller (5b), from which control commands for the at least one and/or the further aerial drone (9a; 9b) are generated and transmitted depending on the flight or crane movements initiated by the main controller (5a).

4. Method according to any one of the preceding claims, wherein the drive motor (132) is designed as an internal combustion engine and is operated in an at least approximately constant operating state, in particular at least approximately in the full load range, wherein speed changes and/or torque changes on the rotor are controlled in a variable manner by adjusting the at least one hydrostatic device (133, 134; 131).

5. Method according to any one of the preceding claims, wherein the aerial drones (9a; 9b) are controlled such that a force (F) having a horizontal component (FH) is exerted on the load (20), wherein the aerial drones (9) are controlled such that the horizontal component (FH) counteracts a pendulum motion of the load (20) and/or counteracts a wind force.

6. Method according to any one of the preceding claims, wherein the aerial drones (9) are controlled such that the load (20) is rotated about a vertical axis while being lifted, wherein at least one aerial drone (9) is flown through the load (20) along an at least approximately helical path about a vertical axis when lifting the load (20).

7. Method according to any one of the preceding claims, wherein the aerial drones (9) are autonomously remotely controlled in an autonomous control mode, such that an aerial drone (9) approaches various predefinable positions relative to a guide drone (9a).

8. Method according to any one of the preceding claims, wherein specified operating parameters of each aerial drone (9), in particular rotor speed and/or rotor angle of attack, are controlled by the controller (5) such that a load suspension means on each aerial drone (9) connecting the aerial drone (9) to the load (20) is subjected to a specified force magnitude and/or a specified force direction, wherein the force directions of the different aerial drones point in different directions.

9. Device for lifting a load (20), in which at least one aerial drone (9) is connected to the load (20) by a load suspension means for carrying at least a portion of the load (20) and the load (20) is connected to a further aerial drone (9b), wherein a common controller (5) is provided for controlling the two aerial drones (9a, b) in coordination with each other, **characterised in that** a lifting and/or tensile force and/or a flight trajectory of the aerial drones (9a; 9b) can be controlled by varying a rotor speed and/or a rotor torque, wherein the aerial drones (9a; 9b) each have a hydrostatic drive train (130) for driving at least one rotor (120-127) comprising at least one hydrostatic device (131) that operates as a pump and can be driven by a drive motor (132), and each have at least one further hydrostatic device (133, 134) that operates as a motor and can be connected to the rotor, and said rotor speed and/or rotor torque can be controlled by adjusting a hydrostatic displacement volume and/or a hydrostatic swivel angle and/or a hydrostatic pumping capacity.

10. Device according to the preceding claim, wherein the load (20) is additionally connected to a load hook (8) of a crane (1) and the common controller (5) is designed to control the two aerial drones together with the crane (1) in a coordinated manner.

11. Device according to any one of the two preceding claims, wherein the common controller (5) has a main controller (5a) having input means (19) for inputting desired flight and/or crane movements, from which control signals are generated and transmitted to the at least one aerial drone (9a) and/or the crane (1) on the basis of the input desired movements, and has an additional controller (5b),which is configured to generate control commands for the at least one and/or the further aerial drone (9a; 9b) depending on the flight or crane movements initiated by the main controller (5a).

12. Device according to any one of the preceding claims 9 to 11, wherein the controller (5) has a position control device (13), which has an automatic follow-up control module for controlling the aerial drone (9) depending on a guide drone position in such a way that the aerial drone (9) automatically follows guide drone movements and maintains a desired position relative to the guidance drone even during guide drone movements, wherein the controller (5) is configured to control the aerial drones (9) such that one of the aerial drones (9) flies along a helical path about a vertical axis passing through the load (20) when lifting the load (20).

13. Device according to claim 10 or any one of claim 11 and 12 referring back to it, wherein a/the position control device (13) has an autonomous control module for autonomous remote control of the aerial drone (9) such that the aerial drone (9) approaches various desired positions relative to the crane and/or a load hook of the crane.

14. Device according to claim 10 or any one of claim 11-13 referring back to it, wherein a position determiner (18) for determining the position of the aerial drone (9) relative to a guide drone is provided, wherein a/the position control device (13) is deigned to control the aerial device (9) depending on the automatically determined relative position, wherein the aerial drone (9) has a GPS unit for absolute position determination of the aerial drone (9), wherein the position control device (13) for controlling the position of the aerial drone (9) relative to the crane is designed to control the aerial drone (9) depending on the absolute position data of the aerial drone (9) and the absolute position data of the crane, wherein the position determiner (18) has a signal locating device for locating a signal output by the aerial drone (9), wherein said signal locating device has mutually spaced transceiver units (15) attached to the crane for communicating with a transceiver unit (16) on the aerial drone (9), and an evaluation unit for evaluating the transmitted signals between the transceiver units (15) on a crane side and the transceiver unit (16) on a drone side, with respect to predetermined signal characteristics, in particular with respect to signal propagation time and/or signal strength, and for determining the position of the aerial drone (9) relative to the crane (1) from the signal characteristics.

15. Device according to any one of the preceding claims 9 to 14, wherein an internal combustion engine (VKM) is provided as a drive motor (132), wherein the aerial drone (9) is designed as a multicopter and has a plurality of rotors, wherein the hydrostatic drive train (130) comprises a plurality of hydrostatic devices (133, 134) operating as motors, which are each drivingly connected to a respective rotor, and are individually adjustable to individually control the speed of the rotors connected to the respective hydrostatic devices.

## Revendications

1. Procédé de levage d'une charge (20), dans lequel au moins un drone volant (9) porte au moins une partie de la charge (20) et la charge (20) est reliée à un autre drone volant (9b) et est partiellement portée et/ou dirigée par l'autre drone volant (9b), les deux drones volants (9a, b) étant commandés ensemble par un appareil de commande commun (5) pour commander les mouvements de vol de manière coordonnée, **caractérisé en ce qu'**une force de levage et/ou de traction et/ou une trajectoire de vol des drones volants (9a ; 9b) sont commandées par variation d'une vitesse de rotation de rotor et/ou d'un couple de rotation de rotor, les drones volants (9a ; 9b) présentant chacun une chaîne cinématique hydrostatique (130) pour entraîner au moins un rotor (120-127) comprenant au moins un hydrostat (131) fonctionnant en tant que pompe, qui peut être entraîné par un moteur d'entraînement (132), et au moins un autre hydrostat (133, 134) fonctionnant en tant que moteur, qui peut être relié au rotor, et ladite vitesse de rotation de rotor et/ou le couple de rotation de rotor étant commandés en ajustant un volume d'absorption de l'hydrostat et/ou un angle de pivotement de l'hydrostat et/ou un débit de pompage de l'hydrostat.

2. Procédé selon la revendication précédente, dans lequel la charge (20) est en outre reliée à un crochet de charge (8) d'une grue et est partiellement portée et dirigée par la grue (1), les drones volants étant commandés conjointement avec la grue (1) par un appareil de commande commun (5) de manière coordonnée.

3. Procédé selon l'une quelconque des revendications précédentes, dans lequel l'appareil de commande commun (5) présente un appareil de commande principal (5a) avec des moyens d'entrée (19) pour entrer des souhaits de mouvement de vol et/ou de grue, à partir duquel des signaux de commande sont générés et transmis à l'au moins un drone volant (9a) et/ou à la grue (1) sur la base des souhaits de mouvement entrés, et un appareil de commande supplémentaire (5b) à partir duquel des instructions de commande pour l'au moins un et/ou l'autre drone volant (9a ; 9b) sont générées et transmises en fonction des mouvements de vol ou de grue ordonnés par l'appareil de commande principal (5a).

4. Procédé selon l'une quelconque des revendications précédentes, dans lequel le moteur d'entraînement (132) est configuré sous forme de moteur à combustion interne et fonctionne dans un état de fonctionnement au moins approximativement constant, notamment au moins approximativement dans la plage de pleine charge, les variations de vitesse de rotation et/ou les variations de couple de rotation sur le rotor étant commandées de manière variable par ajustement de l'au moins un hydrostat (133, 134 ; 131).

5. Procédé selon l'une quelconque des revendications précédentes, dans lequel les drones volants (9a ; 9b) sont commandés de telle sorte qu'une force (F) ayant une composante horizontale (F_{H}) est exercée sur la charge (20), les drones volants (9) étant commandés de telle sorte que la composante horizontale (F_{H}) s'oppose à un mouvement pendulaire de la charge (20) et/ou à une force du vent.

6. Procédé selon l'une quelconque des revendications précédentes, dans lequel les drones volants (9) sont commandés de telle sorte que la charge (20) est tournée autour d'un axe vertical lors du levage, au moins un drone volant (9) étant piloté le long d'un trajet au moins approximativement hélicoïdal autour d'un axe vertical à travers la charge (20) lors du levage de la charge (20).

7. Procédé selon l'une quelconque des revendications précédentes, dans lequel les drones volants (9) sont télécommandés de manière autonome dans un mode de commande autonome de telle sorte qu'un drone volant (9) se déplace vers différentes positions pouvant respectivement être prédéfinies par rapport à un drone de guidage (9a).

8. Procédé selon l'une quelconque des revendications précédentes, dans lequel des paramètres de fonctionnement déterminés de chaque drone volant (9), notamment la vitesse de rotation et/ou l'angle d'attaque du rotor, sont commandés par l'appareil de commande (5) de telle sorte qu'un moyen de réception de charge sur chaque drone volant (9), qui relie le drone volant (9) à la charge (20), est soumis à une valeur de force déterminée et à une direction de force déterminée, les directions de force des différents drones volants étant dirigées dans différentes directions.

9. Dispositif de levage d'une charge (20), dans lequel au moins un drone volant (9) est relié à la charge (20) par un moyen de réception de charge pour porter au moins une partie de la charge (20) et la charge (20) est reliée à un autre drone volant (9b), un appareil de commande commun (5) étant prévu pour commander les deux drones volants (9a, b) de manière coordonnée, **caractérisé en ce qu'**une force de levage et/ou de traction et/ou une trajectoire de vol des drones volants (9a ; 9b) peuvent être commandées par variation d'une vitesse de rotation de rotor et/ou d'un couple de rotation de rotor, les drones volants (9a ; 9b) présentant chacun une chaîne cinématique hydrostatique (130) pour entraîner au moins un rotor (120-127) comprenant au moins un hydrostat (131) fonctionnant en tant que pompe, qui peut être entraîné par un moteur d'entraînement (132), et au moins un autre hydrostat (133, 134) fonctionnant en tant que moteur, qui peut être relié au rotor, et ladite vitesse de rotation de rotor et/ou le couple de rotation de rotor peuvent être commandés en ajustant un volume d'absorption de l'hydrostat et/ou un angle de pivotement de l'hydrostat et/ou un débit de pompage de l'hydrostat.

10. Dispositif selon la revendication précédente, dans lequel la charge (20) est en outre reliée à un crochet de charge (8) d'une grue (1) et l'appareil de commande commun (5) est configuré pour commander les deux drones volants de manière coordonnée conjointement avec la grue (1).

11. Dispositif selon l'une quelconque des deux revendications précédentes, dans lequel l'appareil de commande commun (5) présente un appareil de commande principal (5a) avec des moyens d'entrée (19) pour entrer des souhaits de vol et/ou de mouvement de la grue, à partir duquel des signaux de commande sont générés et transmis à l'au moins un drone volant (9a) et/ou à la grue (1) sur la base des souhaits de mouvement entrés, et un appareil de commande supplémentaire (5b) configuré pour générer des instructions de commande pour l'au moins un et/ou l'autre drone volant (9a ; 9b) en fonction des mouvements de vol ou de grue ordonnés par l'appareil de commande principal (5a).

12. Dispositif selon l'une quelconque des revendications précédentes 9 à 11, dans lequel l'appareil de commande (5) présente un dispositif de commande de position (13) qui possède un module de commande de suivi automatique pour commander le drone volant (9) en fonction d'une position de drone de guidage de telle sorte que le drone volant (9) suit automatiquement les mouvements du drone de guidage et maintient une position souhaitée par rapport au drone de guidage même lors des mouvements du drone de guidage, l'appareil de commande (5) étant configuré pour commander les drones volants (9) de telle sorte que, lors du levage de la charge (20), l'un des drones volants (9) vole le long d'une trajectoire hélicoïdale autour d'une ligne verticale passant par la charge (20).

13. Dispositif selon la revendication 10 ou l'une quelconque des revendications 11 et 12 qui s'y rapportent, dans lequel un/le dispositif de commande de position (13) présente un module de commande autonome pour télécommander de manière autonome le drone volant (9) de telle sorte que le drone volant (9) se déplace vers différentes positions souhaitées par rapport à la grue et/ou à son crochet de charge.

14. Dispositif selon la revendication 10 ou l'une quelconque des revendications 11 à 13 qui s'y rapportent, dans lequel un appareil de détermination de position (18) est prévu pour déterminer la position du drone volant (9) par rapport à un drone de guidage, un/le dispositif de commande de position (13) étant configuré pour commander le drone volant (9) en fonction de la position relative déterminée automatiquement, le drone volant (9) présentant une unité GPS pour déterminer la position absolue du drone volant (9), le dispositif de commande de position (13) pour commander la position du drone volant (9) par rapport à la grue étant configuré pour commander le drone volant (9) en fonction des données de position absolue du drone volant (9) et des données de position absolue de la grue, l'appareil de détermination de position (18) présentant un dispositif de localisation de signal pour localiser un signal émis par le drone volant (9), ledit dispositif de localisation de signal présentant des unités d'émission/réception (15) montées sur la grue, espacées les unes des autres, pour communiquer avec une unité d'émission/réception (16) sur le drone volant (9), ainsi qu'un appareil d'évaluation pour évaluer les signaux transmis entre les unités d'émission/réception (15) côté grue et l'unité d'émission/réception (16) côté drone en ce qui concerne des propriétés de signal prédéterminées, notamment en ce qui concerne le temps de propagation du signal et/ou l'intensité du signal, et pour déterminer la position du drone volant (9) par rapport à la grue (1) à partir des propriétés du signal.

15. Dispositif selon l'une quelconque des revendications 9 à 14 précédentes, dans lequel un moteur à combustion interne (VKM) est prévu en tant que moteur d'entraînement (132), le drone volant (9) étant configuré sous forme de multicoptère et présentant plusieurs rotors, la chaîne cinématique hydrostatique (130) comprenant plusieurs hydrostats (133, 134) fonctionnant en tant que moteur, qui sont respectivement reliés en entraînement à un rotor et sont configurés de manière à pouvoir être ajustés individuellement, afin de commander individuellement la vitesse de rotation des rotors reliés aux hydrostats respectifs.
